Europäisches Patentamt

European Patent Office

Office européen des brevets

(19)

(11) Veröffentlichungsnummer: **0 272 567 B1**

(12) **EUROPÄISCHE PATENTSCHRIFT**

(45) Veröffentlichungstag der Patentschrift: **28.08.91**

(51) Int. Cl.⁵: **B60K 17/30**

(21) Anmeldenummer: **87118449.5**

(22) Anmeldetag: **12.12.87**

(54) **Radkopf.**

(30) Priorität: **23.12.86 DE 3644143**

(43) Veröffentlichungstag der Anmeldung:
**29.06.88 Patentblatt 88/26**

(45) Bekanntmachung des Hinweises auf die
Patenterteilung:
**28.08.91 Patentblatt 91/35**

(84) Benannte Vertragsstaaten:
**AT BE CH DE ES FR GB IT LI**

(56) Entgegenhaltungen:
**DE-A- 1 430 050        DE-A- 2 154 474
DE-A- 2 207 589        DE-A- 2 930 298
FR-A- 2 136 160        FR-A- 2 351 322
US-A- 1 381 597        US-A- 1 427 584
US-A- 2 357 742**

(73) Patentinhaber: **DEERE & COMPANY
1 John Deere Road
Moline, Illinois 61265(US)**

(72) Erfinder: **Hückler, Volker
Rossittenstrasse 11
W-7760 Radolfzell 16(DE)**
Erfinder: **Eckhardt, Uli
Goethestrasse 1
W-6701 Altrip(DE)**

(74) Vertreter: **Feldmann, Bernhard et al
DEERE & COMPANY European Office, Patent
Department Steubenstrasse 36-42 Postfach
503
W-6800 Mannheim 1(DE)**

Rank Xerox (UK) Business Services

**Beschreibung**

Die Erfindung betrifft einen Radkopf mit exzentrischem Antrieb gemäß den Merkmalen von Patentanspruch 1.

Bei einem bekannten Radkopf mit einem exzentrischen Antrieb (DE-C-2 930 298) treibt die Antriebswelle über ein Stirnradgetriebe die Radnabe an. Die Radnabe ist über zwei so nahe wie möglich aneinander gerückte Kegelrollenlager, die nur durch eine Ringschulter zur Lastaufnahme voneinander getrennt sind, drehbar gelagert, wobei gleichzeitig eine Lastüberhöhung eintritt, die nur dadurch zu begrenzen ist, daß die Kegelrollenlager nächstmöglich zur Radmittelebene hin angeordnet werden. Diesem Radkopf haftet der Nachteil an, daß die Drehmomenteneinleitung in die Radnabe über eine Welle stattfindet, die wegen der sie umgebenden Lager im Durchmesser gering gehalten ist und somit einer hohen Beanspruchung unterliegt. Zudem tritt eine hohe Festigkeitsbelastung des Radkopfträgers, der Radnabe und der Lager auf, weil letztere aufgrund ihrer eng benachbarten Anordnung nur geringe Stützmomente aufbauen können.

Bei einem anderen bekannten Radkopf (DE-A-22 07 589) ist der Radkopfträger als Glocke ausgebildet, und nimmt in sich konzentrisch eine weitere Glocke auf, deren Glockenboden drehfest mit der Radnabe und deren Glockenrand drehfest mit einem Hohlrad verbunden ist. Das Hohlrad kämmt mit einer zu der Drehachse der Radnabe exzentrisch angeordneten Antriebswelle. Dieser Radkopf ist sehr teile- und somit kostenaufwendig gestaltet. Durch die Verwendung zweier Glocken ergibt sich zudem eine große Baubreite und Bauhöhe.

Die der Erfindung zugrunde liegende Aufgabe wird darin gesehen, einen Radkopf vorzuschlagen, der bei einer kompakten Bauweise bei exzentrischem Antrieb geringen Festigkeitsbelastungen unterliegt.

Diese Aufgabe ist erfindungsgemäß durch die Merkmale des Patentanspruch 1 gelöst worden.

Auf diese Weise kann die Drehmomenteneinleitung mittels des im Durchmesser groß gehaltenen Hohlrades direkt in die Radnabe erfolgen, wobei das Hohlrad sogar aus einem Teil mit der Radnabe gefertigt oder über eine geeignete kraft-und/oder formschlüssige Verbindung mit dieser verbunden sein kann. Da der Durchmesser des Hohlrades, das nahezu den gesamten Radkopf umschließt, so groß ist, wirken an ihm geringere Drehmomente als an der Welle des bekannten Radkopfes. Die antriebsseitige Lagerung kann relativ weit von der anderen Lagerung entfernt untergebracht werden, die am anderen Ende des Radkopfträgers gelegen sein kann, weil die antriebsseitige Lagerung die Antriebswelle umgibt, was aufgrund des exzentrischen Antriebs ebenfalls exzentrisch geschieht. Der sich durch diese Anordnung ergebende Stützabstand erbringt ein großes Stützmoment, so daß sich also eine geringe und ausgeglichenere Festigkeitsbelastung als bei dem bekannten Radkopf ergibt.

In den Unteransprüchen sind vorteilhafte Merkmale, insbesondere der Lagerungen, angegeben, die sowohl eine einwandfreie Aufnahme der radial wie auch der axial wirkenden Kräfte garantieren. Jedoch sind die angegebenen Varianten auch aus Kostengründen interessant, da die beiden Kegelrollenlager der abtriebsseitigen Lagerung klein gehalten werden können und Gleit- bzw. Kugellager auch mit einem größeren Durchmesser nicht übermäßig teuer sind.

Die Merkmale der Patentansprüche 7 bis 9 sorgen auch bei Zwischenrädern und insbesondere bei mehrstufigen Zwischenrädern für die Beibehaltung einer kompakten Bauweise, so daß auch bei Rädern von geringer Breite, die an die Radnabe angeschraubt werden, die Radnabe gar nicht oder nur gering axial über das Rad vorsteht.

In der Zeichnung sind mehrere nachfolgend näher beschriebene Ausführungsbeispiele der Erfindung dargestellt. Es zeigt:

Figur 1     einen erfindungsgemäßen Radkopf mit einer aus einem Kugellager bestehenden antriebsseitigen Lagerung in Seitenansicht und im Schnitt,

Figur 2     den erfindungsgemäßen Radkopf gemäß Figur 1 mit einer aus einem Gleitlager bestehenden antriebsseitigen Lagerung,

Figur 3     den erfindungsgemäßen Radkopf gemäß Figur 1 mit einer aus einem Kegelrollenlager bestehenden antriebsseitigen Lagerung,

Figur 4     den erfindungsgemäßen Radkopf gemäß Figur 1 mit einer aus einem Kugellager bestehenden antriebsseitigen Lagerung und mit einem zweistufigen Untersetzungsgetriebe und

Figur 5     eine Seitenansicht des Radkopfes und des zweistufigen Untersetzungsgetriebes gemäß Figur 4.

Ein erfindungsgemäßer Radkopf 10 enthält einen Radkopfträger 12, eine Radnabe 14, eine Antriebswelle 16, eine antriebsseitige und eine abtriebsseitige Lagerung 18 und 20 sowie ein einstufiges Untersetzungsgetriebe 22.

Der Radkopf 10 ist zum Anbau an eine nicht gezeigte Vorderachse eines Ackerschleppers bestimmt und über eine ebenfalls nicht dargestellte Lenkeinrichtung horizontal oder annähernd horizontal schwenkbar. Er stellt die antriebsmäßige Verbindung zwischen einem Achskörper mit Vorderradantrieb und einem antreibbaren Rad dar. Jedoch kann der Radkopf auch bei einem Hinterradantrieb eines Kraftfahrzeuges, wie etwa bei einem Mähdrescher oder einem selbstfahrenden Feldhäcksler, Verwendung finden.

Der Radkopfträger 12 ist als Schwenkteil mit einer runden Platte 24, einer Gabel 26, einem Tragzapfen 28 und zwei Lagerzapfen 30 ausgebildet und mit dem Achskörper über einen nicht gezeigten Achsschenkelbolzen verbunden, der geringfügig geneigt verläuft, um einen negativen Lenkrollradius zu erzeugen.

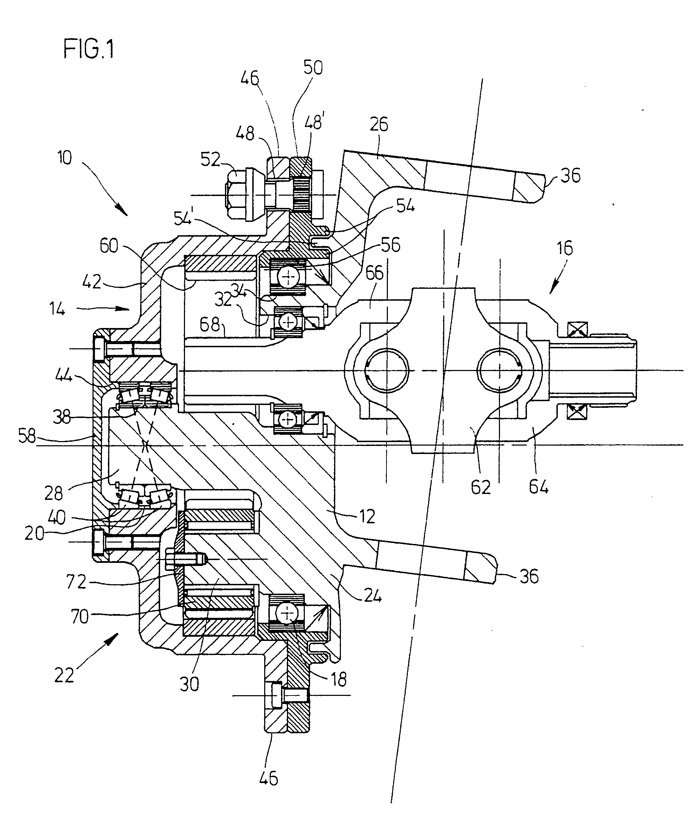

Mit Blick auf jede der Figuren 1 bis 4 ist zu erkennen, daß einerseits an der runden Platte 24 die Gabel 26 und andererseits der Tragzapfen 28 und die Lagerzapfen 30 angreifen. Die Platte 24 erstreckt sich senkrecht zu der Aufstandsebene des Rades und ist mit einer Öffnung 32 zum Eintritt der Antriebswelle 16 sowie auf ihrem Außenrand mit einem Lagersitz 34 versehen.

Die Gabel 26 enthält in an sich bekannter Weise zwei Lageraugen 36 mit jeweils einer nicht bezifferten Bohrung, durch die sich der Achsschenkelbolzen erstreckt.

Der Tragzapfen 28 erstreckt sich zentrisch und axial von der Platte 24 aus nach außen, d. h. in der Zeichnung nach links, fort und ist auf seinem äußeren Endbereich mit einem Lagersitz 38 versehen, der der Aufnahme von einem oder mehreren Kegelrollenlagern 40 dient.

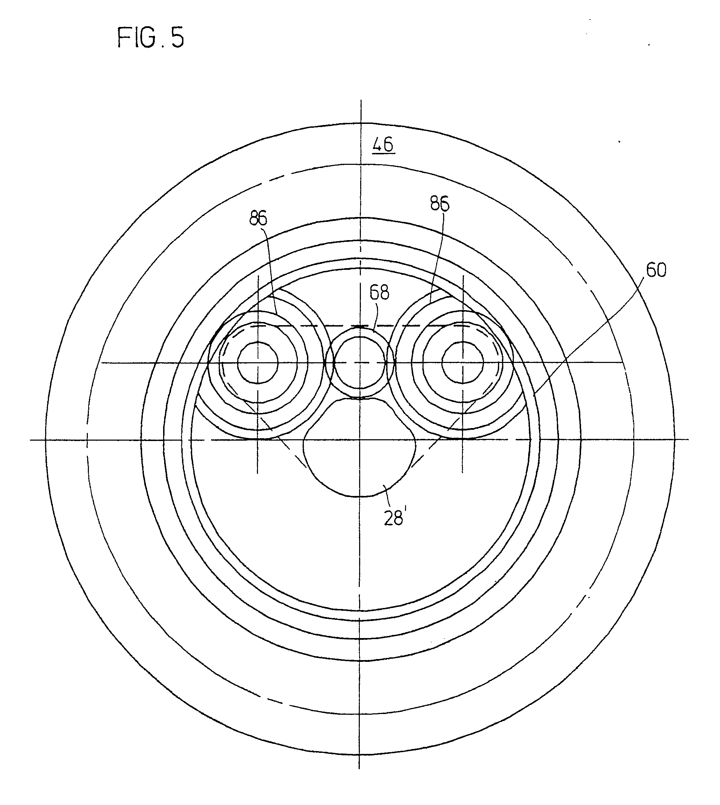

Die Lagerzapfen 30 erstrecken sich parallel zu der Drehachse des Rades, die in diesem Ausführungsbeispiel mit der Drehachse der Platte 24 und der Längsmittenachse des Tragzapfens 28 zusammenfällt; sie sind jedoch kürzer und von geringerem Durchmesser. Wenn sie auch in den Figuren 1 bis 4 sich unterhalb des Tragzapfens 28 befindend dargestellt sind, so geschieht dies nur aus Gründen der Übersichtlichkeit, während aus Figur 5 analog hervorgeht, daß sie sich oberhalb des Tragzapfens 28 befinden.

Die Radnabe 14 weist die Form einer Glocke auf, deren Glockenboden 42 eine Bohrung 44 zur Aufnahme der Kegelrollenlager 40 enthält und die als rotationssymmetrischer Teil ausgebildet ist. Sie weist an ihrem der Bohrung 44 gegenüberliegenden Ende einen Bund 46 mit Durchgangsbohrungen 48 auf, und eine Ringscheibe 50 von etwa der gleichen Größe wie der Bund 46 und mit deckungsgleichen Durchgangsbohrungen 48' liegt axial an dem Bund 46 an. Durch die Durchgangsbohrungen 48, 48' erstrecken sich Radschrauben 52, die der lösbaren Befestigung des Rades auf der Radnabe 14 dienen. Von der Ringscheibe 50 erstrecken sich axial zwei Dichtlippen 54, die in diesem Ausführungsbeispiel aus Gußringen gebildet sind, und der Innenumfang der Ringscheibe 50 ist als Lagersitz 56 ausgearbeitet. Die Dichtlippen 54 nehmen zwischen sich in der Art einer Labyrinthdichtung eine an der Platte 24 befestigte Dichtlippe 54' auf.

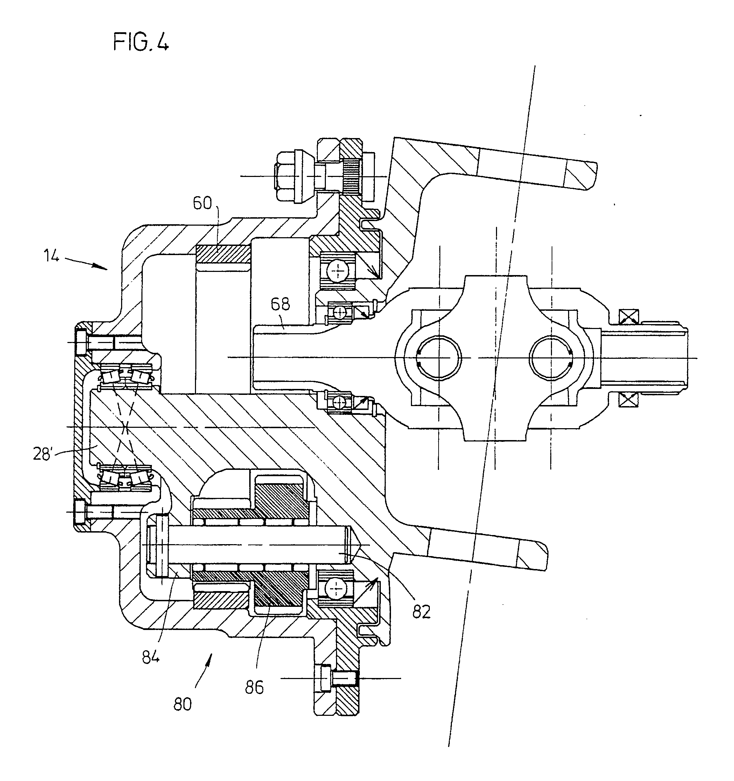

konzentrisch auf. Zum Verschließen des Glockenbodens 42 im Bereich der Bohrung 44 ist ein demontierbarer Deckel 58 vorgesehen. Auf der Innenfläche des Glockenrandes ist ein Hohlrad 60 des einstufigen oder gemäß Figur 4 eines zweistufigen Untersetzungsgetriebes 22 vorgesehen, wobei bei diesem Ausführungsbeispiel das Hohlrad 60 als ein eigenständiger Teil über eine entsprechende Preßpassung in der Radnabe 14 drehfest gehalten wird. Die Radnabe 14 stützt sich einenends über die antriebsseitige Lagerung 18 auf der Platte 24 und anderenends über die abtriebsseitige Lagerung 20 auf dem Tragzapfen 28 ab, wobei ausgehend von Figur 1 die antriebsseitige Lagerung 18 von einem Kugellager gebildet wird, das zwischen dem Lagersitz 34 auf der Platte 24 und dem Lagersitz 56 in der Ringscheibe 50 gehalten ist. Die abtriebsseitige Lagerung 20 besteht aus zwei in X-Weise angeordneten Kegelrollenlagern 40, die in die Bohrung 44 eingesetzt und auf dem Lagersitz 38 mittels zweier nicht näher bezeichneter Anschläge axial gehalten sind. Die Radnabe 14 kann also um ihre Drehachse um den Tragzapfen 28 drehen.

Die Antriebswelle 16 enthält ein Doppelkardangelenk 62, dessen Mittelpunkt auf der Längsmittenachse des Achsschenkelbolzens liegt und das einen antriebsseitigen und einen abtriebsseitigen Teil 64 und 66 enthält, wobei sich der abtriebsseitige Teil 66 durch die Öffnung 32 hindurch bis in den Innenraum des Hohlrades 60 fliegend erstreckt und dort ein Eingangsrad 68 drehfest aufnimmt. Zwischen dem Außenumfang des abtriebsseitigen Teils 66 und dem Innenumfang der Öffnung 32 erstrecken sich ein Wälz- oder Gleitlager und eine Dichtung, die jedoch nicht beziffert und herkömmlich befestigt und ausgebildet sind. Der horizontale Abstand zwischen dem Mittelpunkt eines Doppelkardangelenkes 62 und dem in der Zeichnung linken Ende des Bundes 46 ist mit der Strecke X angegeben, und man erkennt, daß diese Strecke sehr kurz ist.

Das in den Figuren 1 bis 3 dargestellte einstufige Untersetzungsgetriebe 22 enthält außer dem Eingangsrad 68 und dem Hohlrad 60 zwei Zwischenräder 70, die jeweils auf den Lagerzapfen 30 drehbeweglich, jedoch axial fest gehalten sind. Ihre Drehbeweglichkeit wird über Nadellager 78 und ihre axiale Halterung durch eine angeschraubte Scheibe 72 gewährleistet. Die beiden Zwischenräder 70 kämmen sowohl mit dem Eingangsrad 68 wie auch mit dem Hohlrad 60, so daß der Antrieb auf kürzestem Weg von der Antriebswelle 16 auf die Radnabe 14 übertragen werden kann.

Man vermag aus allen Figuren deutlich zu erkennen, wie sich die Antriebswelle 16 bzw. deren abtriebsseitiger Teil 66 mit dem Eingangsrad 68 durch den Innenraum der antriebsseitigen Lagerung 18, also innerhalb des von dem Innenring des Gleit-, Kugel- oder Kegelrollenlagers umschlossenen Raumes, erstreckt. Auf diese Weise kann die antriebsseitige Lagerung 18 sehr nahe an dem Achskörper vorgesehen sein, wodurch sich der Abstand zu der abtriebsseitigen Lagerung 20 vergrößert und somit ein großes Stützmoment entsteht. Gleichzeitig reduziert sich die Länge der Strecke X, also der Abstand zwischen dem Mittelpunkt des Doppelkardangelenkes 62 zu dem in der Zeichnung linken Ende des Bundes 46, woraus sich eine gedrungene Bauweise und eine geringe Momentenbelastung an der Gabel 26 ergibt.

Bei den in den Figuren 1 bis 3 dargestellten Ausführungsbeispielen erfolgt der Verlauf des Antriebes über Komponenten, die alle in einer vertikalen Ebene liegen, so daß Torsionsmomente im wesentlichen ausgeschaltet sind.

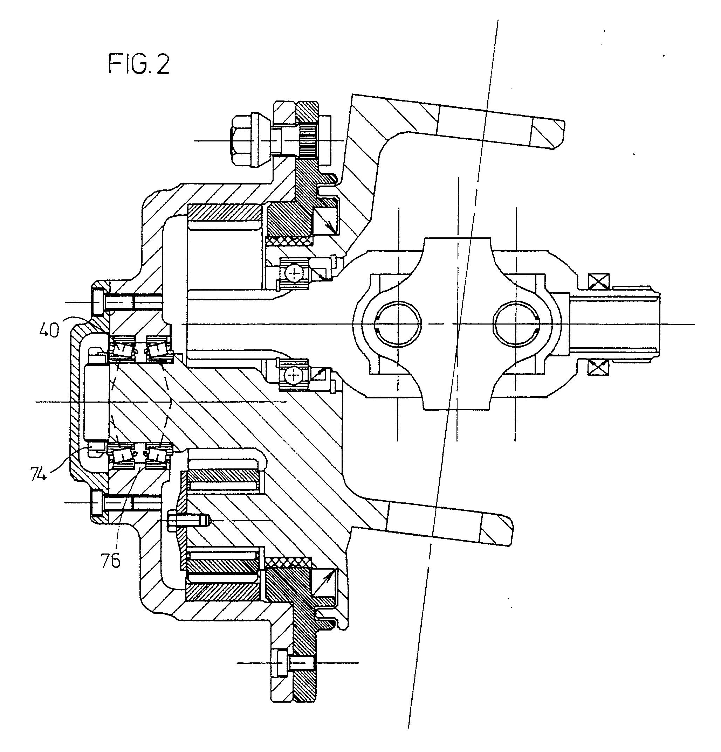

Auf eine detaillierte Beschreibung der Ausführungsbeipiele gemäß den Figuren 2 bis 4 wird verzichtet, da sich diese mit dem in Figur 1 gezeigten im wesentlichen decken, abgesehen von der Ausbildung der antriebs- und abtriebsseitigen Lagerung 18 und 20.

In Figur 2 wird die antriebsseitige Lagerung 18 durch ein Gleitlager verwirklicht, das an gleicher Stelle wie das Kugellager in Figur 1 angeordnet ist, während die abtriebsseitige Lagerung 20 von zwei nunmehr in O-Anordnung montierten Kegelrollenlagern 40 gebildet wird. Da das Gleitlager in diesem Ausführungsbeispiel keine Axialkräfte aufnehmen kann, werden die beiden Kegelrollenlager 40 mittels einer auf den Tragzapfen 28 aufgeschraubten Spannmutter 74 gegen eine zwischen ihnen gelegene Schulter 76 in der Aussparung gespannt und legen so die Radnabe 14 axial auf dem Tragzapfen 28 fest.

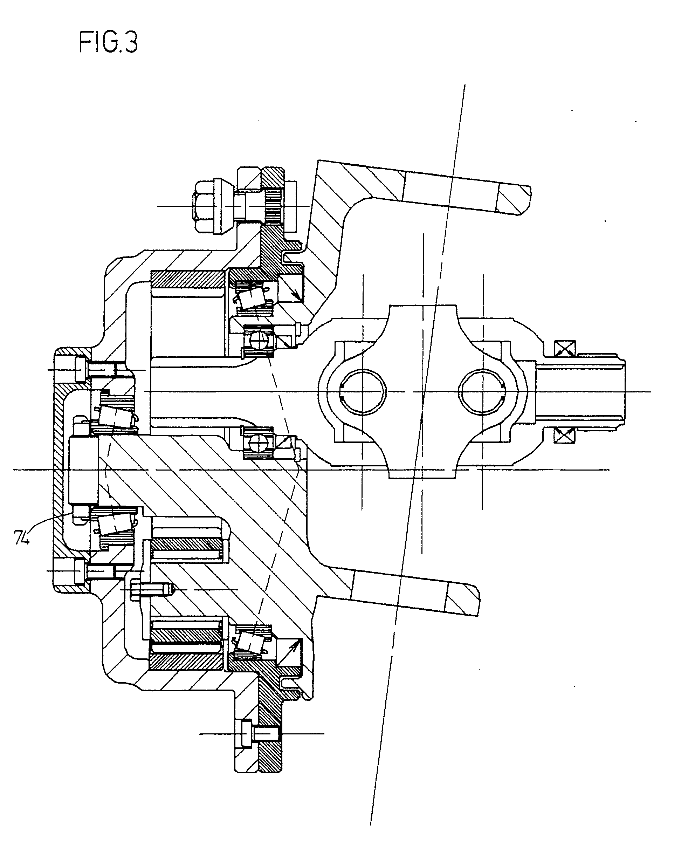

Das in Figur 3 gezeigte Ausführungsbeispiel weist sowohl als antriebs- wie auch als abtriebsseitige Lagerung 18 und 20 ein Kegelrollenlager auf, von denen das antriebsseitig gelegene ungefähr den dreifachen Durchmesser des abtriebsseitig gelegenen hat. Diese beiden Kegelrollenlager sind ebenfalls in O-Anordnung montiert und gegen entsprechende nicht näher bezeichnete, jedoch aus der Zeichnung entnehmbare Schultern mittels der Spannmutter 74 gespannt.

Aus den Figuren 4 und 5 geht schließlich ein Ausführungsbeispiel hervor, dessen Lagerungen 18 und 20 den in Figur 1 gezeigten entsprechen, das jedoch anstatt eines einstufigen Untersetzungsgetriebes 22 ein zweistufiges Untersetzungsgetriebe 80 enthält. Der Radkopf 10 ändert sich hierdurch insofern, als die Radnabe 14 axial verlängert wird, als die Lagerzapfen 30 durch Bolzen 82 ersetzt werden, die in einem Steg 84 auf dem ebenfalls verlängerten Tragzapfen 28′ gehalten werden, und als die bisherigen Zwischenräder 70 durch Doppelräder 86 ersetzt werden. Die Doppelräder 86 bestehen aus zwei hohlen Rädern mit unterschiedlich großem Außendurchmesser, die miteinander drehfest verbunden sind und von denen das mit dem größeren Außendurchmesser mit dem Eingangsrad 68 und das mit dem kleineren Außendurchmesser mit dem Hohlrad 60 kämmt, wie es sich insbesondere aus Figur 5 ergibt.

**Patentansprüche**

1. Radkopf eines antreibbaren Rades

   mit einer Antriebswelle (16), einer Radnabe (14), einem Radkopfträger (12) und einer antriebs- und einer abtriebsseitigen Lagerung (18, 20), wobei

   a) die Drehachse der Antriebswelle (16) exzentrisch zu der Drehachse der Radnabe (14) verläuft,
   b) die Radnabe (14) mittels der Lagerungen (18 und 20) auf dem Radkopfträger (12) drehbar gelagert ist,
   c) die antriebsseitige Lagerung (18) einen Ringraum umschließt, der wesentlich größer ist als der der abtriebsseitigen Lagerung (20),
   d) sich die Antriebswelle (16) durch den Ringraum der antriebsseitigen Lagerung (18) erstreckt,
   e) sich der Radkopfträger (12) durch den Ringraum beider Lagerungen (18, 20) bis zur Außenkante der Radnabe (14) erstreckt,
   f) die Radnabe (14) zwischen den Lagerungen (18, 20) fest mit einem innenverzahnten Hohlrad (60) verbunden ist und
   g) das Hohlrad (60) von der Antriebswelle (16) aus angetrieben wird.

2. Radkopf nach Anspruch 1, dadurch gekennzeichnet, daß das Hohlrad (60) und die Radnabe (14) einstückig sind.

3. Radkopf nach Anspruch 1, dadurch gekennzeichnet, daß das Hohlrad (60) form- und/oder kraftschlüssig mit der Radnabe (14) verbunden ist.

4. Radkopf nach Anspruch 1, dadurch gekennzeichnet, daß die abtriebsseitige Lagerung (20) zwei aneinander angeordnete Kegelrollenlager (40) enthält.

5. Radkopf nach Anspruch 4, dadurch gekennzeichnet, daß die antriebsseitige Lagerung (18) ein Gleitlager oder ein Kugellager enthält.

6. Radkopf nach Anspruch 1, wobei beide Lagerungen (18, 20) jeweils ein Kegelrollenlager enthalten, die in O-Anordnung zueinander stehen, dadurch gekennzeichnet, daß das abtriebsseitige Kegelrollenlager einen wesentlich kleineren Durchmesser aufweist als das antriebsseitige.

7. Radkopf nach Anspruch 1, wobei die Antriebswelle (16) endseitig mit einem Eingangsrad (68) versehen ist, das über zwei Zwischenräder (70, 86) auf die Radnabe (14) Antriebskraft überträgt, dadurch gekennzeichnet, daß die Zwischenräder (70) und das Eingangsrad (68) radial innerhalb des Hohlrades (60) angeordnet sind.

8. Radkopf nach Anspruch 7, dadurch gekennzeichnet, daß die Zwischenräder (86) innerhalb der Radnabe (14) angeordnet sind.

9. Radkopf nach Anspruch 7, dadurch gekennzeichnet, daß die Zwischenräder (86) zweistufig ausgebildet sind, wobei eine erste Stufe mit dem Eingangsrad (68) und eine zweite Stufe mit dem Hohlrad (60) kämmt.

10. Radkopf nach Anspruch 1, dadurch gekennzeichnet, daß die Radnabe (14) sich axial erstreckende Dichtlippen (54) aufweist, die mit sich ebenfalls axial von dem Radkopfträger (12) erstreckenden Dichtlippen (54') zusammenwirken und eine Labyrinthdichtung bilden.

## Claims

1. Wheel hub unit of a drivable wheel, with a drive shaft (16), a wheel hub (14), a wheel hub unit support (12) and a drive-side and a driven-side bearing (18, 20), wherein
   a) the axis of rotation of the drive shaft (16) runs eccentrically relative to the axis of rotation of the wheel hub (14),
   b) the wheel hub (14) is rotatably mounted on the wheel hub unit support (12) by means of the bearings (18 and 20),
   c) the drive-side bearing (18) encloses an annular space which is substantially larger than that of the driven-side bearing (20),
   d) the drive shaft (16) extends through the annular space of the drive-side bearing (18),
   e) the wheel hub unit support (12) extends through the annular space of the two bearings (18, 20) up to the outer edge of the wheel hub (14),
   f) the wheel hub (14) is fixedly attached to an internally toothed hollow gear (60) between the bearings (18, 20) and

   g) the hollow gear (60) is driven from the drive shaft (16).

2. Wheel hub unit according to claim 1, characterized in that the hollow gear (60) and the wheel hub (14) are formed in one piece.

3. Wheel hub unit according to claim 1, characterized in that the hollow gear (60) is connected to the wheel hub (14) in interlocking and/or force-fitting manner.

4. Wheel hub unit according to claim 1, characterized in that the driven-side bearing (20) comprises two tapered roller bearings (40) grouped together.

5. Wheel hub unit according to claim 4, characterized in that the drive-side bearing (18) comprises a sliding bearing or a ball bearing.

6. Wheel hub unit according to claim 1, wherein both bearings (18, 20) each contain a tapered roller bearing, which stand in O-arrangement to one another, characterized in that the driven-side tapered roller bearing has a substantially smaller diameter than that on the drive-side.

7. Wheel hub unit according to claim 1, wherein the drive shaft (16) is provided at its end with an input gear (68) which transmits drive force to the wheel hub (14) through two intermediate gears (70, 86), characterized in that the intermediate gears (70) and the input gear (68) are arranged radially inside the hollow gear (60).

8. Wheel hub unit according to claim 7, characterized in that the intermediate gears (86) are arranged inside the wheel hub (14).

9. Wheel hub unit according to claim 7, characterized in that the intermediate gears (86) are formed in two stages, a first stage meshing with the input gear (68) and a second stage with the hollow gear (60).

10. Wheel hub unit according to claim 1, characterized in that the wheel hub (14) has axially extending sealing lips (54) which cooperate with sealing lips (54') extending likewise axially from the wheel hub unit support (12) and form a labyrinth seal.

## Revendications

1. Ensemble de roue motrice
   comportant un arbre d'entraînement (16), un moyeu (14), un support (12) de l'ensemble de roue et des paliers (18,20) situés côté entraînement et côté mené, et dans lequel

a) l'axe de rotation de l'arbre d'entraînement (16) est excentré par rapport à l'axe de rotation du moyeu (14),

b) le moyeu (14) est monté de manière à pouvoir tourner sur le support (12) de l'ensemble de roue au moyen des paliers (18,20),

c) le palier (18), situé sur le côté entraînement, enserre un espace annulaire qui est nettement plus étendu que le palier (20) situé sur le côté mené,

d) l'arbre d'entraînement (16) s'étend dans l'espace annulaire du palier (18) situé sur le côté entraînement,

e) le support (12) de l'ensemble de roue traverse l'espace annulaire des deux paliers (18,20) pour s'étendre jusqu'au niveau de l'arête extérieure du moyeu (14),

f) le moyeu (14) est raccordé de façon fixe, entre les paliers (18,20), à une couronne (60) à denture intérieure, et

g) la couronne (60) est entraînée à partir de l'arbre d'entraînement (16).

2. Ensemble de roue selon la revendication 1, caractérisé en ce que la couronne (60) et le moyeu (14) sont réalisés d'un seul tenant.

3. Ensemble de roue selon la revendication 1, caractérisé en ce que la couronne (60) est raccordée au moyeu (14) selon une liaison par complémentarité de formes et/ou selon une liaison de force.

4. Ensemble de roue selon la revendication 1, caractérisé en ce que le palier (20) situé sur le côté mené contient deux roulements à rouleaux coniques (40) disposés côte-à-côte.

5. Ensemble de roue selon la revendication 4, caractérisé en ce que le palier (18) situé sur le côté entraînement contient un palier lisse ou un roulement à billes.

6. Ensemble de roue selon la revendication 1, dans lequel les deux paliers (18,20) contiennent les roulements à rouleaux coniques respectifs, qui sont disposés l'un par rapport à l'autre selon une disposition en O, caractérisé en ce que le roulement à rouleaux coniques situé sur le côté mené possède un diamètre nettement plus faible que celui du roulement à rouleaux coniques situé sur le côté entraînement.

7. Ensemble de roue selon la revendication 1, dans lequel l'arbre d'entraînement (16) comporte, à son extrémité, un pignon d'entrée (68), qui transmet au moyeu (14) la force d'entraînement par l'intermédiaire de deux pignons intermédiaires (70,86), caractérisé en ce que les pignons intermédiaires (70) et le pignon d'entrée (68) sont disposés radialement à l'intérieur de la couronne (60).

8. Ensemble de roue selon la revendication 7, caractérisé en ce que les pignons intermédiaires (86) sont disposés à l'intérieur du moyeu (14).

9. Ensemble de roue selon la revendication 7, caractérisé en ce que les pignons intermédiaires (86) sont réalisés en deux étages, dont le premier engrène avec le pignon d'entrée (68) et dont le second engrène avec la couronne (60).

10. Ensemble de roue selon la revendication 1, caractérisé en ce que le moyeu (14) possède des lèvres d'étanchéité axiales (54), qui coopèrent avec des lèvres d'étanchéité (54'), qui s'étendent également axialement à partir du support (12) de l'ensemble de roue et forment un joint d'étanchéité à labyrinthe.

FIG.1

FIG.2

40

74

76

FIG.3

74

FIG. 4

FIG.5